Europäisches Patentamt

European Patent Office

Office européen des brevets

(11) Publication number : **0 498 775 A1**

# EUROPEAN PATENT APPLICATION

(21) Application number : **92830045.8**

(22) Date of filing : **04.02.92**

(51) Int. Cl.⁵ : **A01B 3/40,** A01B 13/14,
A01B 15/08

Priority 070291 IT VR91000014.

(30) Priority : **07.02.91**

(43) Date of publication of application :
**12.08.92 Bulletin 92/33**

(84) Designated Contracting States :
**AT DE FR GB**

(71) Applicant : **Sabbadini, Giovanni**
**Via Barchessa, 1**
**I-46039 Villimpenta (Mantova) (IT)**

(72) Inventor : **Sabbadini, Giovanni**
**Via Barchessa, 1**
**I-46039 Villimpenta (Mantova) (IT)**

(74) Representative : **Sarpi, Maurizio**
**Studio FERRARIO Via Collina, 36**
**I-00187 Roma (IT)**

(54) **Ambiversatile multi-furrow plough with variable angle displacement incorporating tilling blade elements.**

㊸ The present invention relates to a multi-furrow plough which is particularly suitable for working the surface soil and at the same time tilling the ground in order to facilitate the drainage, the oxygenation and the storing of humidity during the summer months.

The main characteristic of the present plough is the ambiversatility and the variable angle displacement which permits on the one hand to carry out consecutive passages on the soil, both onwards and backwards, the direction of cutting of the tools being automatically varied, and on the other hand to automatically adjust both the angulation of the ploughshares and the distance among, the furrows.

In general, the present plough comprises a fixed support (5) on an end of which a central part of an arm (6) is pivoted. The arm (6) is arranged horizontally and may be pivoted at least 90° in both opposite directions.

The aforesaid arm is moved in both directions by a piston (8), which may be hydraulic, pneumatic or the like. Moreover, the arm supports a series of ploughshares (15), the distance among them being adjustable. A tilling blade (20) is arranged under each ploughshare.

fig. 1

EP 0 498 775 A1

The present patent of invention refers to an ambiversatile multi-furrow plough with variable angle displacement incorporating tilling, blade elements.

According to known art, the ploughing and tilling phases of the soil are carried out by some types of plough comprehending different members and equipments depending on the kind of working to be effected.

For instance, the even ploughing is very diffuse in the intensive agriculture and is effected when the soil is permeable enough or is designed for cultivations for which a good quantity of humidity is necessary.

Such kind of ploughing does not take useful soil away from the culture, permits an easy, uniform irrigation, makes the use of agricultural tractors easier and is quicker owing to the absence of vain runs on the heads.

This technique, by means of which a first furrow is opened along a field and a subsequent furrow is opened on leaning the pieces always in the same direction, is carried out by using swivel ploughs or two-way ploughs, which reverse the pieces to the right and to the left alternatively in subsequent simple runs.

The use of such ploughs seems to be effective as regards the work of the soil, however there are some inconveniences due to the fact that the operating body must be moved to the right or to the left or the operating body must be rotated from the top to the bottom and viceversa, according to an inversion which must be effected at the beginning of each furrow.

It stands to reason that all the aforesaid operations involve a series of operative slowing downs due to the manual adjustment of the device at the beginning of each furrow and such slowing downs may greatly affect the whole working time in the long run and cause a considerable increase of the costs of production. From another point of view, the known ploughs do not comprise organs which may carry out, at the same time, the working of the surface soil and the tilling of the ground in the depth. As a matter of fact, for accomplishing all the aforesaid operations it is necessary to use more devices showing different characteristics by means of which both operations must be carried out separately.

The present invention reaches the object of eliminating the above-mentioned inconveniences because a plough has been conceived with means suitable for carrying out a more rational cultural technique for agricultural soils. In fact, the present plough permits the following:

a) working the surface soil. This helps and improves the transformation of the organic substance in humus;

b) tilling the soil so as to favour the drainage, the oxygenation and the storage of humidity during the summer months;

c) Simultaneous ploughing and tilling, the working of two tools being thus carried out;

d) Varying with a distance control the incision angle of the ploughshares on eliminating the operative slowing downs which are inevitable when the tool must be manually adjusted at the beginning of each furrow, in case of even ploughing.

All the aforecited characteristics permit to reach the object of considerably reducing the time to be spent for working the soil and therefore limiting the cost of production.

The above objects are reached by means of a constructive solution consisting of an ambiversatile multi-furrow plough with variable angle displacement, of simple structure and realization, to be mounted on an agricultural tractor and to be used in a very simple way for the aforesaid purposes, which should make possible a rapid diffusion of this plough also on a vast scale.

In fact, the invention relates to an ambiversatile multi-furrow plough, to be used out of furrow, with variable angle displacement, characterized in that for comprising a support bar to be mounted on an agricultural tracting means or the like and extended to a certain length in order to comprise a revolving horizontal arm on its end, the horizontal arm being provided with the cutting organs for working the soil; the said arm being pivoted, preferably at its middle, on the end of such bar and being movable angularly relative to the fulcrum by at least a pneumatic or hydraulic piston; the said incision organs consisting of a series of particularly shaped ploughshares incorporating a corresponding number of blade elements; adjusting organs being also provided for adjusting the distances among the ploughshares.

The structural characteristics and merits of the present invention will appear more clearly from the following detailed description, set forth as an example not limiting the invention itself, as well as from the annexed drawing wherein:

– Figure 1 shows a schematic view of the disclosure according to the invention as a whole with the arm supporting the tools arranged in a first working angulation;

– Figure 2 is a corresponding view of the preceding figure after the tool arm has been rotated 90°:

– Figure 3 shows a schematic view of a detail of the organs for working the soil arranged on the revolving arm.

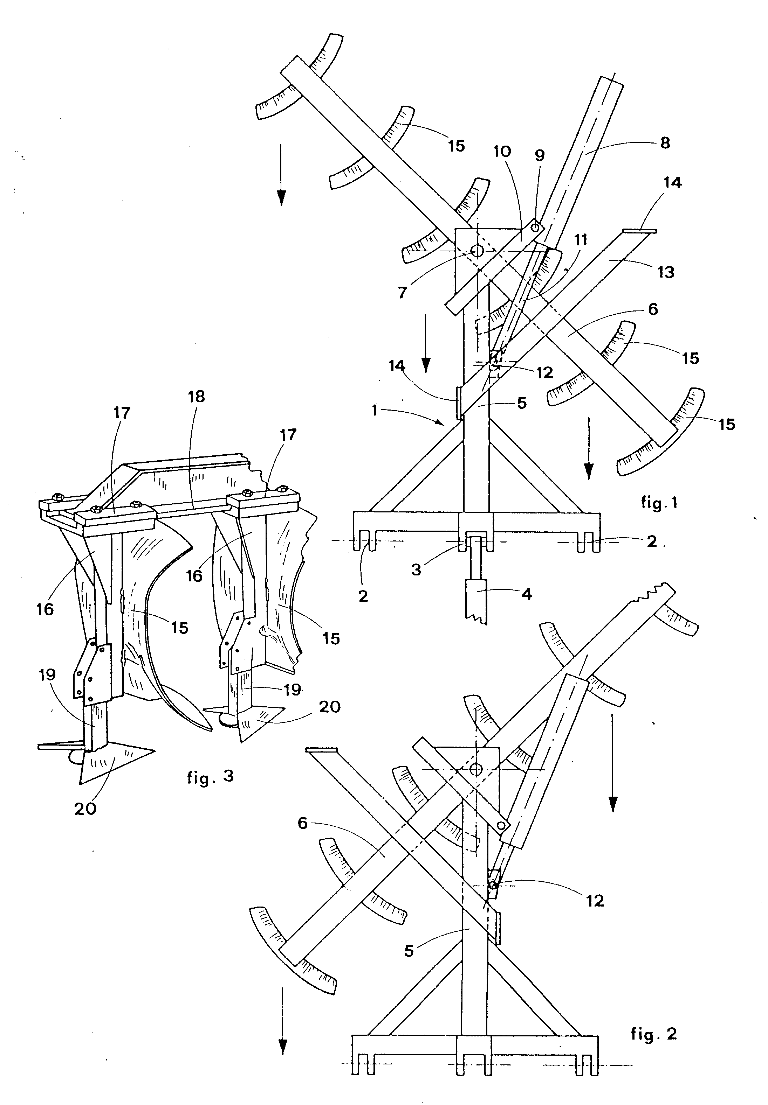

With reference to the accompanying drawing and in particular to the Figures 1 and 2, the multi-furrow plough according to the invention is mounted on a support 1 which is to be mounted on the rear of a tractor or the like by means of side couplings 2 and central upper coupling 3. The coupling 3 is connected with a small piston 4 adjusting the lifting.

The support 1 comprises a supporting bar 5 which extends to a certain length in order that a swinging arm 6 may be pivoted on its free end, at the middle 7 acting as centre of rotation.

The angular displacement of the swinging arm 6 is accomplished by a hydraulic piston 8 applied on a coupling pivot 9 of a plate 10 which is fixed on the arm 6 at one side, while the end of a shank 11 is coupled with a joint point 12 fixed on the bar 5.

The ends of the angular displacement of the arm are determined by a guide 13 which is fixed on the arm itself and beats with its ends 14 on the sides of the bar 5.

The arm 6 bears a series of ploughshares 15, arranged at regular distances.

More precisely and as it can be seen in Figure 3, the ploughshares 15 are fixed on respective supports 16 comprehending coupling elements 17 which may be adjusted and fixed on a rail 18 which is a part of the arm 6.

The ploughshares 15 show a particularly arcuated shape, that is a vertical concavity turned in the direction of travel of the tool and a horizontal convexity turned in the same direction in order to obtain a spoon shape with side flanks turned backwards.

This particular shape makes the working of the surface soil easier because a gradual progressive action is possible.

Each supporting structure 16 comprises and holds a ploughshare 15 and is provided with a vertical extension 19 which supports a tilling blade element 20 projecting downwards in respect of the ploughshare in order to penetrate the ground in the depth.

Both the ploughshares 15 and the blade element 20 may be adjusted as regards their position on the rail 18 and support 16 respectively, as already mentioned, in order to vary the distance among the tools and the cutting depth.

According to a possible variant, the blade element 20 shown in Figure 3 and having a structure suitable for dry grounds may be substituted by essentially disc-shaped blades which show a slight conicity with the vertex turned upwards-and are suitable for moist grounds.

As it can be seen in Figures 1 and 2, the angular displacement of the arm 6 causes an automatic change in the side pushing of the ploughshares according to several angles comprised between two positions which are opposed 90° one from the other, for the advancing of the tool in the direction of the arrows causes the displacement of the soil to the right in the first position and to the left in the second position.

All the aforesaid operations are performed by the operator of the device who simply acts on a hydraulic gearcase when it is necessary to invert the direction at the beginning of the furrow.

From the above description, it can be realized how much the agricultural technique may be rationalized by using a plough which carries out, simultaneously, both the working of the surface soil and the tilling of the ground in the depth, there being the possibility of adjusting the angular displacement of the tools by acting on the control hydraulic piston.

In the description, there is an example of an ambiversatile multi-furrow plough the characteristics of which may also show some variants to be considered included in the sphere of protection of the present invention.

## Claims

1. An ambiversatile multi-furrow plough with variable angle displacement, characterized in that for comprising a supporting bar (5), which has to be mounted on an agricultural tractor or the like and extends for a certain length in order that the free end of the supporting bar (5) can support a revolving horizontal arm (6) on which cutting tools (15, 16, 19, 20) are arranged for cutting the ground; the aforesaid arm (6) being pivoted, preferably at its middle, on the free end of the said supporting bar (5) and being displaceable angularly in respect of a point of fulcrum (7) by at least a pneumatic or hydraulic piston (11); the aforesaid cutting tools consisting of a series of ploughshares (15) which show a particular shape and incorporate respective tilling blade elements (20); adjusting means (17) being also provided for adjusting the distances among the ploughshares (15).

2. A plough as claimed in the preceding claim, characterized in that the said supporting bar (5) may be mounted on the rear of a tractor or the like by means of suitable couplings, at least two couplings being side couplings (2) and one upper, middle coupling (3) being connected with a small piston (4) by which it is possibile to adjust the lifting of the bar itself.

3. A plough as claimed in the preceding claims, characterized in that the angular displacement of the revolving arm (6) is carried out by a hydraulic piston (11) or the like which is mounted on a coupling pin of a plate (10), which is fixed on the said arm (6) at one side, and the end of the piston rod being coupled with a hinge point (12) fixed on the bar (5).

4. A plough as claimed in the preceding claims, characterized in that the said revolving arm (6) supports a series of ploughshares (15), arranged at regular distances, and a respective series of tilling blade elements (20), which project downwards in respect of the ploughshares so as to penetrate the ground in the depth.

5. A plough as claimed in the preceding claims, characterized in that the said ploughshares (5) show a particularly arcuated shape, that is a vertical concavity turned in the advancing direction of the plough and a horizontal convexity turned in the same direction in order to obtain a spoon shape with side flanks turned backwards.

6. A plough as claimed in the preceding claims, characterized in that according to a possible variant, the aforesaid tilling blade elements (20), which have a shape suitable for dry grounds, may be substituted by essentially disc-shaped blades for moist grounds, which blades show a slight conicity with upward vertex.

fig. 1

fig. 2

fig. 3

**European Patent Office**

## EUROPEAN SEARCH REPORT

Application Number

EP 92 83 0045

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-5 000 267 (HARRELL)<br>* abstract *<br>* column 8, line 15 – line 25; figures *<br>--- | 1-4 | A01B3/40<br>A01B13/14<br>A01B15/08 |
| Y | US-A-4 800 963 (GOMEZ)<br>* abstract; figures *<br>--- | 1-4 | |
| Y | CH-A-104 726 (ALTHAUS)<br>* page 1, left column, line 1 – line 8; figures *<br>--- | 1-4 | |
| A | US-A-3 115 191 (WARD)<br>* figures *<br>--- | 1-3 | |
| A | FR-A-2 604 850 (COSTE)<br>* figures 1,7 *<br>----- | 5 | |
| | | | **TECHNICAL FIELDS SEARCHED (Int. Cl.5)**<br><br>A01B |

The present search report has been drawn up for all claims

| Place of search | Date of completion of the search | Examiner |
|---|---|---|
| THE HAGUE | 18 MAY 1992 | WALVOORT B.W. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)